# EUROPÄISCHE PATENTSCHRIFT

(11) **EP 1 584 635 B1**
(45) Veröffentlichungstag und Bekanntmachung des Hinweises auf die Patenterteilung: **29.12.2010**
(21) Anmeldenummer: 05003560.9
(22) Anmeldetag: 18.02.2005
(51) Int. Cl.: C08G 18/10, C08G 18/32, C08G 18/62, C09K 3/10

(54) **Alkalibeständige Giessharzsysteme**
Alkali resistant casting resin systems
Systèmes de résines à couler résistants aux alcali

(30) Priorität: 25.03.2004 DE 102004015184
(43) Veröffentlichungstag der Anmeldung: 12.10.2005
(73) Patentinhaber: BASF SE, 67056 Ludwigshafen (DE)
(72) Erfinder: Reese, Hans-Jürgen, 82140 Olching (DE); Pohl, Wolfgang, Dr., 80797 München (DE); Fritz, Ralf, Dr., 86926 Greifenberg (DE)

(56) Entgegenhaltungen:
- DE-A1- 4 200 172
- DE-A1- 4 429 345
- US-A- 4 546 166

## Beschreibung

Die Erfindung betrifft ein Tunneldichtsystem oder Straßenbeschichtungssystem auf Basis von Polyisocyanat-Polyadditionsprodukten, aufgebaut aus Isocyanatprepolymeren mit einem NCO-Gehalt von 8 bis 25 % (a), erhältlich durch Umsetzung von Polyisocyanaten mit Dimerdiolen, mit gegenüber Isocyanaten reaktiven Verbindungen oder Gemischen, die Aminogruppen enthalten (b), sowie ein Verfahren zu dessen Herstellung und dessen Verwendung als Dichtungsmittel, insbesondere als reaktives Dichtungsmittel von Betonelementen im Tunnelbau oder als Dichtungsmittel im Straßenbau.

Für die Dichtung von Betonelementen im Tunnelbau sind für das sogenannte Tübbing-Verfahren, dem Einbau von einzelnen Betonsegmenten bei Erhalt einer Röhre beim fortschreitendem Bohren einer Tunnels, sind bisher nur thermoplastische Kunststoffmassen bekannt.

Nach bisheriger Technologie werden diese thermoplastischen Dichtmassen entweder als speziell gestaltete Dichtbänder eingelegt oder bei höheren Temperaturen geschmolzen und diese Kunststoffschmelze in die vorgesehenen Dichtungsnuten der Betonelemente eingetragen. Aufgrund der herrschenden Bedingungen beim Bau einer Tunnelröhre (z.B. bei U-Bahnen) sind diese bisher bekannten Dichtverfahren sehr energieintensiv und verfahrenstechnisch aufwendig. Außerdem treten Risse im Bauverlauf durch Querkräfte auf, deren Beseitigung in aufwendigen Nachbesserungsverfahren sehr kostenintensiv sind.

Reaktive Kunststoffsysteme, insbesondere Polyurethansysteme sind für solche Art von Dichtungen unbekannt. Haupthinderungsgründe waren bisher die niederen Temperaturen, Feuchtigkeit und die Alkalität des Betons, die reaktive Polyurethansysteme ausschlossen.

Aufgabe der Erfindung war es, ein Gießharz, insbesondere ein 2-Komponenten-Polyurethangießharzsystem zu finden, welches unter den beim Tunnelbau herrschenden Bedingungen der niedrigen Temperaturen im genügendem Maße aushärtet, trotz der Anwesenheit von Feuchtigkeit kompakt härtet und damit extrem hydrophob ist und schließlich im längeren Gebrauch als fertige Polyurethandichtmasse alkaliresistent ist.

Des weiteren war es Aufgabe der Erfindung, ein Gießharz, insbesondere ein 2-Komponenten-Polyurethangießharzsystem zu finden, welches vorteilhaft zur Straßensanierung, insbesondere mittels Sprühbeschichtung, verwendet werden kann.

Die Aufgabe der Erfindung konnte unerwartet dadurch gelöst werden, dass ein Isocyanatprepolymer durch Umsetzung von Isocyanaten mit Dimerdiolen erhalten wird und dieses Prepolymer mit Aminen zur Reaktion gebracht wird. Die Lösung war überraschend, da die Verwendung von Dimerdiolen in der Polyurethanchemie zwar grundsätzlich bekannt ist, aber der Fachmann durch den Stand der Technik auf andere Einsatzgebiete hingeführt wird. So beschreibt DE-A-1 720 913 den Einsatz von Dimerdiolen zur Herstellung von härtbaren Triglycidylisocyanuraten. WO 98/16914 offenbart den Einsatz von Dimerdiolen als Kettenverlängerungsmittel in thermoplastischen Polyurethanen. WO 03/070801 und WO 03/082944 beschreiben den Einsatz von Polyestern auf Basis von Dimerdiolen in Schuhsohlen bzw. Heißklebern.

DE 44 29 345 A1 offenbart ein Polyurethan-System und dessen Verwendung als Dichtungsmasse in der Elektro- oder Bauindustrie (Seite 4 Zeilen 55 bis 57)), das aus 33,2 Gew.-% Dimerdiol und 66,8 Gew.-% 4,4'-Diisocyanato-diphenylmethan zusammengesetzt ist. Der NCO-Gehalt dieses Prepolymeres beträgt 16,8%. Danach wird das Prepolymer mit Hydroxylkomponenten (Tabelle 1, Beispiele a bis i) vergossen, die keine Aminogruppen.

Gegenstand der Erfindung ist daher ein Gießharzsystem auf Basis von Polyisocyanat-Polyadditionsprodukten, aufgebaut aus
a) Isocyanatprepolymeren mit einem NCO-Gehalt von 5 bis 28 %, erhältlich durch Umsetzung von Polyisocyanaten mit Dimerdiolen, mit
b) gegenüber Isocyanaten reaktiven Verbindungen oder Gemische, die Aminogruppen enthalten.

Die dem erfindungsgemäßen Gießharz zugrunde liegenden Polyisocyanat-Polyadditionsprodukte enthalten damit sowohl Polyurethan- als auch Polyharnstoffgruppen.

Unter "Gießharz" wird im Rahmen dieser Erfindung ein flüssiges System verstanden, dass die vorstehend genannten Komponenten (a) und (b) enthält, und das (nach Vermischen der Komponenten (a) und (b) in ein Formwerkzeug oder auf eine Oberfläche gegossen werden kann und anschließend (bevorzugt ohne äußerliche Druckanwendung) härtet.

Nach dem Aushärten des erfindungsgemäßen Gießharzes liegen sogenannte kompakte Polyisocyanat-Polyadditionsprodukte vor. Unter kompaktem Polyisocyanat-Polyadditionsprodukten werden im Rahmen dieser Erfindung Polyisocyanat-Polyadditionsprodukte (d.h. bevorzugt Polyurethane und Polyharnstoffe) verstanden, die ohne Zusatz von Treibmitteln hergestellt wurden. Gegebenenfalls können die verwendeten Verbindungen mit gegenüber Isocyanat reaktiven Gruppen (Komponente b) jedoch geringe Anteile an Restwasser enthalten. Bevorzugt ist der Restwassergehalt unter 1 Gew.-%, besonders bevorzugt unter 0,3 Gew.-%, bezogen auf das Gesamtgewicht der eingesetzten Komponente (b).

Die erfindungsgemäßen, ausgehärteten Gießsysteme weisen im allgemeinen eine Dichte von 0,8 g/l bis 1,3 g/l, bevorzugt von 0,9 g/l bis 1,1 g/l. auf.

Als Komponente (a) enthalten die erfindungsgemäßen Gießsysteme Polyisocyanatprepolymere. Diese Polyisocyanatprepolymere sind erhältlich, indem Polyisocyanate (a-1), beispielsweise bei Temperaturen von 30 bis 100°C, bevorzugt bei etwa 80°C, mit Di-merdiolen (a-2), zum Prepolymer umgesetzt werden. Das Dimerdiol-Polyisocyanat-Verhältnis wird hierbei so gewählt, dass der NCO-Gehalt des Prepolymeren 5 bis 28 Gew.%, vorzugsweise 10 bis 22 Gew.-%, besonders bevorzugt 13 bis 20 Gew.-% beträgt. Um Nebenreaktionen durch Luftsauerstoff auszuschließen, kann die Umsetzung unter Inertgas, vorzugsweise Stickstoff, durchgeführt werden.

Als Polyisocyanate (a-1) kommen die üblichen aliphatischen, cycloaliphatischen und insbesondere aromatischen Di- und/oder Polyisocyanate zum Einsatz. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten (Roh-MDI). Die Isocyanate können auch modifiziert sein, beispielsweise durch Einbau von Uretdion-, Carbamat-, Isocyanurat-, Carbodiimid-, Allophanatund insbesondere Urethangruppen.

Zur Herstellung des isocyanatprepolymers (a) werden die Polyisocyanate (a-1) mit Dimerdiolen (a-2) umgesetzt. Bei der Komponente (a-2) handelt es sich um Dimerisierungsprodukte von Alkoholen mit 6 bis 25 Kohlenstoffatomen, bevorzugt um lineare Fettalkohole mit 12 bis 22 Kohlenstoffatomen, besonders bevorzugt um lineare Fettalkohole mit 16 bis 20 Kohlenstoffatomen.

Beispiele für Alkohole, die zur Dimerisierung geeignet sind, sind Cetylakohol, Stearylalkohol, Oeylalkohol, Erucylalkohol, Ricinolalkohol, Linoleylalkohol, Linolenylalkohol, Arachidylalkohol und/oder Gadoleylalkohol.

Die verwendeten Dimerdiole weisen im allgemeinen eine Hydroxylzahl von 100 bis 500, bevorzugt von 150 bis 300, besonders bevorzugt von 180 bis 220 auf. Die tatsächliche Funktionalität der verwendeten Dimerdiole beträgt im allgemeinen 1,6 bis 2,3, bevorzugt 1,8 bis 2,1.

Die Herstellung der Dimerdiole erfolgt durch Dimerisierung der oben genannten Alkohole oder durch Reduktion von dimerisierten Fettsäuren oder dimerisierten Fettsäureestern. Geeignete dimerisierte Fettsäuren umfassen die Dimerisationsprodukte von Fettsäuren (oder Derivate davon) mit 14 bis 22 Kohlenstoffatomen, insbesondere mit 18 Kohlenstoffatomen. Beispiele hierfür sind Ölsäure, Linolsäure, Linolensäure oder Palmitinsäure.

In einer bevorzugten Ausführungsform wird ein Dimerdiol gemäß allgemeiner Formel (1) verwendet:

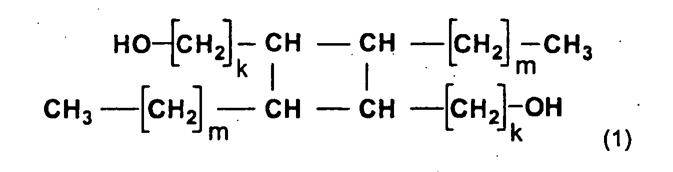

In der allgemeinen Formel (1) ergibt k + m einen Wert zwischen 13 und 17, bevorzugt ist k + m gleich 15. Die jeweiligen Einzelwerte für "k" und "m" könne je nach Lage der Doppelbindung zwischen 1 und 14 liegen.

Das erfindungsgemäße Gießharzsystem enthält neben Isocyanatprepolymeren (a) auch noch gegenüber Isocyanaten reaktive Verbindungen, die Aminogruppen enthalten oder gegenüber Isocyanaten reaktive Gemische, die Aminogruppen enthalten. Die Verbindungen oder Gemische der Komponente (b) enthalten NH- und/oder NH₂-Gruppen. Darüber hinaus können sie jedoch weitere Gruppen enthalten, die gegenüber Isocyanaten reaktive Wasserstoffatome aufweisen, beispielsweise Gruppen, ausgewählt-aus OH-Gruppen, SH-Gruppen, und/oder CH-aciden Gruppen, wie z.B. β-Diketo-Gruppen.

Die Verbindungen in Komponente (b) weisen in allgemeinen ein zahlenmittleres Molekulargewicht von 200 bis 5000 g/mol auf.

Es hat sich gezeigt, dass es drei besonders bevorzugte Ausführungsformen für die Komponente (b) gibt.

In einer ersten Ausführungsform umfasst die Komponente (b) Verbindungen, die primäre oder sekundäre Amingruppen als alleinige funktionelle Gruppen aufweisen, d.h. diese Verbindungen haben bevorzugt keine weiteren, gegenüber Isocyanaten reaktiven Wasserstoffatome. Diese Verbindungen haben im allgemeinen ein zahlenmittleres Molekulargewicht von 200 bis 2000 g/mol und tragen ein bis vier primäre oder sekundäre Aminogruppen im Molekül.

In dieser Ausführungsform werden beispielsweise monomolekulare aliphatische und/oder aromatische Amine als Komponente (b) verwendet. Ferner können beispielsweise polymere Aminverbindungen eingesetzt werden, zum Beispiel solche, die am Ende einer Polyetherkette Aminoendgruppen tragen, insbesondere solche, die unter dem Handelsnamen Jeffamin^{®} kommerziell erhältlich sind.

Diese erste Ausführungsform zeichnet sich durch ein resultierendes, besonders alkalibeständiges Gießharzsystem aus. Durch die hohe Reaktivität ist jedoch eine maschinelle Verarbeitung empfehlenswert.

In einer zweiten Ausführungsform umfasst die Komponente (b) sogenanntes "Aminopolyole". Hierbei handelt es sich um Polyetherpolyole, die ausgehend von einem aminischen Startermolekül alkoxyliert werden. Die Alkoxylierung erfolgt nach bekannten Verfahren, beispielsweise durch anionische Polymerisation von Alkylenoxiden in Gegenwart von Alkalihydroxiden.

Als Alkylenoxide werden vorzugsweise Ethylenoxid und 1,2-Propylenoxid eingesetzt. Die Alkylenoxide können einzeln, alternierend nacheinander oder als Mischungen verwendet werden.

Als Startermoleküle kommen beispielsweise aliphatische und aromatische, gegebenenfalls N-mono-, N,N- und N,N'-dialkylsubstituierte Diamine mit 1 bis 4 Kohlenstoffatomen im Alkylrest, wie z.B. gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Anilin, Phenylendiamine, 2,3-, 2,4-, 3,4- und 2,6-Toluylendiamin und 4,4'-, 2,4'- und/oder 2,2'-Diamino-diphenylmethan in Betracht.

Es ist hierbei wesentlich, dass die Alkoxylierung nur soweit betrieben wird, dass das resultierende Aminopolyol zwar bereits OH-Gruppen, aber auch noch primäre oder sekundäre Aminogruppen aufweist. (Die primären oder sekundären Aminogruppen resultieren von den Aminogruppen des Startermolekül, an die kein Alkylenoxid angelagert wurde.)

Die Aminopolyole besitzen im allgemeinen eine theoretische Funktionalität von 3 bis 8, bevorzugt von 3 bis 4. Die Aminopolyole weisen im allgemeine ein zahlenmittleres Molekulargewicht von 150 bis 2000 g/mol, bevorzugt von 200 bis 800 g/mol, besonders bevorzugt von 250 bis 600 g/mol auf.

Die bevorzugt verwendeten Aminopolyole weisen ein Verhältnis von Amin- zu OH-Gruppen von 51 : 49 bis 90 : 10, besonders bevorzugt von 60 : 40 bis 85 : 15 auf.

Die zweite Ausführungsform zeichnet sich durch ein resultierendes, sehr alkalibeständiges Gießharzsystem aus. Durch die mittelhohe Reaktivität ist eine maschinelle Verarbeitung nicht zwingend erforderlich, ein (wünschenswerter) Handverguss ist in eingeschränktem Maße möglich.

In der dritten Ausführungsform enthält die Komponente (b) die Bestandteile Aminopolyol (b-1) und Dimerdiol (b-2), wobei sowohl für Aminopolyole als auch für Dimerdiole vorstehend gemachte Erläuterungen und bevorzugte Ausführungsformen zutreffend sind.

Im allgemeinen werden die Komponenten (b-1) und (b-2) in einem Mengenverhältnis von 10 : 1 bis 1 : 10, bevorzugt 1: 1 bis 1 : 5, besonders bevorzugt 1 : 1 bis 1 : 3 eingesetzt.

Im allgemeinen weist das Gemisch der Komponenten (b-1) und (b-2) ein Verhältnis von Amin- zu OH-Gruppen von 10 : 90 bis 60 : 40 besonders bevorzugt von 15 : 85 bis 40 : 60 auf.

Die dritte Ausführungsform zeichnet sich durch ein resultierendes, alkalibeständiges Gießharzsystem aus. Durch die mittlere Reaktivität ist ein Handverguss gut möglich.

Es ist weiterhin bevorzugt, dass das erfindungsgemäße Gießharzsystem ein Hydrophobierungsmittel enthält. Als Hydrophobierungsmittel ist jedes Mittel geeignet, welches die Hydrophobie des Gießharzsystems erhöht und sich nicht negativ auf die sonstigen Eigenschaften auswirkt. Ferner ist bevorzugt, dass das Hydrophobierungsmittel in die Polyurthanmatrix einbaubar ist, d.h. dass es eine gegenüber Isocyanaten reaktive Gruppe aufweist.

Das Hydrophobierungsmittel kann in einer Menge von 1 bis 60 Gew.-%, bevorzugt von 3 bis 30 Gew.-%, besonders bevorzugt von 5 bis 20 Gew.-%, bezogen auf das Gesamtgewicht der Komponenten (a) und (b) eingesetzt werden. Es kann der Komponente (a) und/oder der Komponente (b) zugesetzt werden. Bevorzugt wird es der Komponente (a) und der Komponente (b) zugesetzt.

Als Hydrophobierungsmittel ist beispielsweise ein Mischpolymerisat von aromatischen Kohlenwasserstoffen mit Phenol geeignet. Diese Mischpolymerisate weisen im allgemeinen ein zahlenmittleres Molekulargewicht von 200 bis 3000 g/mol, bevorzugt von 300 bis 2000 g/mol auf. Bevorzugt wird ein Copolymerisat von ungesättigten aromatischen Kohlenwasserstoffen, enthaltend 9 oder 10 Kohlenstoffatome, mit Phenol verwendet. Dieses Copolymerisat weist bevorzugt ein zahlenmittleres Molekulargewicht von 300 bis 2000 g/mol auf.

Die Umsetzung der Komponenten (a) und (b) erfolgt in einer bevorzugten Ausführungsform in Gegenwart eines Katalysators (c). Als Katalysatoren werden vorzugsweise tertiäre Amine, Zinn-Katalysatoren oder Alkalisalze verwendet.

Die Umsetzung der Komponenten (a) und (b) erfolgt gegebenenfalls in Anwesenheit von (d) Hilfs- und/oder Zusatzstoffen, wie z.B. Zellreglern, Trennmitteln, Pigmenten, Flammschutzmittel, Verstärkungsstoffen wie Glasfasern, oberflächenaktiven Verbindungen und/oder Stabilisatoren gegen oxidativen, thermischen, hydrolytischen oder mikrobiellen Abbau oder Alterung.

Im allgemeinen wird die Komponente (a) als Isocyanatkomponente und die Komponente (b), gegebenenfalls im Gemisch mit Katalysatoren (c) und Zusatzstoffen (d) als Polyolkomponente bezeichnet.

Gegenstand der Erfindung ist ferner ein Verfahren zur Herstellung eines Polyurethangießharzes durch Umsetzung von
a) Isocyanatprepolymeren mit einem NCO-Gehalt von 5 bis 28 %, erhältlich durch Umsetzung von Polyisocyanaten mit Dimerdiolen, und
b) gegenüber Isocyanaten reaktiven Verbindungen oder Gemischen, die Aminogruppen enthalten.

Die oben beschriebenen bevorzugten Ausführungsformen für das erfindungsgemäße kompakte Polyurethan beziehen sich ebenso auf das erfindungsgemäße Verfahren.

Zur Herstellung von Polyurethanschaumstoffen werden im allgemeinen die Komponenten (a) und (b) in solchen Mengen zur Umsetzung gebracht, dass das Äquivalenzverhältnis von NCO-Gruppen zur Summe der reaktiven Wasserstoffatome 1:0,8 bis 1: 1,25, vorzugsweise 1:0,9 bis 1:1,15 beträgt. Ein Verhältnis von 1:1 entspricht hierbei einem NCO-Index von 100.

Sofern dem erfindungsgemäßen Verfahren in der Komponente (a) ein vorstehend beschriebenes Hydrophobierungsmittel zugegeben wird, so ist es bevorzugt, das Hydrophobierungsmittel erst nach erfolgter Umsetzung von Polyisocyanaten mit Dimerdiolen zugegeben wird.

Die erfindungsgemäßen Gießharzsysteme werden bevorzugt als Dichtungsmittel verwendet. Hierbei sind zwei Ausführungsformen besonders bevorzugt, die nachfolgend als "harte" und als "weiche" Ausführungsform bezeichnet werden.

In der besonders bevorzugten "harten" Ausführungsform werden die erfindungsgemäßen Gießharze als reaktives Dichtungsmittel, insbesondere im Tunnelbau verwendet.

Die hierfür verwendeten erfindungsgemäßen Systeme weisen bevorzugt eine Härte von Shore D (gemessen nach DIN 53505) von 20 bis 90, bevorzugt von Shore D 50 bis 75 auf.

Die bevorzugte Härte kann beispielsweise durch geeignete Wahl des NCO-Gehaltes des Prepolymers und durch die Menge des gegebenenfalls eingesetzten Hydrophobierungsmittels erreicht werden.

Bevorzugt beträgt der NCO-Gehalt des Prepolymers in dieser (harten) Äusführungsform 18 bis 28 %, besonders bevorzugt 20 bis 27 %, insbesondere 21 bis 26 %.

Bevorzugt wird in dieser Ausführungsform das Hydrophobierungsmittel in einer Menge von 5 bis 20 Gew.-%, insbesondere von 7 bis 18 Gew.-%, bezogen auf das Gesamtpolyurethansystem eingesetzt.

Die "harte" Ausführungsform des erfindungsgemäßen Gießharzsystems ist besonders als Dichtungsmittel für den Tunnelbau geeignet. Dies ist unter anderem dadurch bedingt, dass dieses Ausführungsform trotz der hohen Härte einen sogenannten "Memory-Effekt" aufweist.

Unter Memory-Effekt ist zu verstehen, dass bei Deformation, insbesondere bei Deformation um bis zu 65 %, das erfindungsgemäße Gießharz nach Ende der Krafteinwirkung innerhalb von wenigen Stunden den Ursprungszustand wieder einnimmt.

In der besonders bevorzugten "weichen" Ausführungsform werden die erfindungsgemäßen Gießharze als Dichtungsmittel oder Beschichtungsmittel, insbesondere als Sanierungsmittel, im Straßenbau verwendet.

Die hierfür verwendeten erfindungsgemäßen Systeme weisen bevorzugt eine Härte von Shore A (gemessen nach DIN 53505) von 10 bis 90, bevorzugt von Shore A 30 bis 75 auf.

Die bevorzugte Härte kann beispielsweise durch geeignete Wahl des NCO-Gehaltes des Prepolymers und durch die Menge des gegebenenfalls eingesetzten Hydrophobierungsmittels erreicht werden.

Bevorzugt beträgt der NCO-Gehalt des Prepolymers in dieser (weichen) Ausführungsform 5 bis 20 %, besonders bevorzugt 7 bis 18 %, insbesondere 8 bis 16 %.

Bevorzugt wird in dieser Ausführungsform das Hydrophobierungsmittel in einer Menge von 20 bis 60 Gew.-%, insbesondere von 22 bis 55 Gew.-%, bezogen auf das Gesamtpolyurethansystem, eingesetzt.

Die Erfindung soll durch nachfolgende Beispiele veranschaulicht werden.

### Ausführungsbeispiel 1

### ("harte"-Ausführungsform, bevorzugt für den Einsatz als Tunneldichtungssystem)

### Herstellung der Polyolkomponente:

In einen entsprechenden Mischbehälter mit Rührvorrichtung wurden nacheinander 52 kg eines dimerisierten C₁₉-Fettalkohols (Handelsname: Sovermol^{®} 908 (Firma Henkel)) mit einer OH-Zahl von 206 mg KOH/g, 30 kg eines tetrafunktionellen Aminpolyols mit einer OH- plus Amin-Zahl von 800 mg KOH/g, 15 kg eines Copolymerisats eines ungesättigten aromatischen C₉-/C₁₀-Kohlenwasserstoffes mit Phenol mit einer OH-Zahl von 64 mg KOH/g, 3 kg eines zeolithischen Trockenmittels sowie 100 g eines aminischen Katalysators (z.B. Diazobicyclooktan 33% in Dipropylenglykol) zu einer Polyolkomponente homogenisiert.

### Herstellung der Isocyanatkomponente:

In einem entsprechenden Reaktor mit Rührwerk, Heiz- sowie Kühlvorrichtung wurden 121 kg Diphenylmethandiisocyanat (Gemisch aus 4,4'- und 2,4'-Isomeren) vorgelegt und diesem unter Rühren 49 kg eines dimerisierten C₁₉-Fettalkohols (Handelsname: Sovermol^{®} 908 (Firma Henkel)) mit einer OH-Zahl von 206 mg KOH/g zugegeben. Das Reaktionsgemisch wurde unter Beachtung der Reaktionswärme mit der Heiz- oder Kühlvorrichtung auf ca. 80°C erwärmt. Diese Temperatur wurde mit Hilfe der Regelvorrichtung ca. 60 min gehalten. Nach vollständigen Umsatz wurde dem Prepolymer in einer zweiten Umsatzstufe 30 kg eines Copolymerisats eines ungesättigten aromatischen C₉-/C₁₀-Kohlenwasserstoffes mit Phenol mit einer OH-Zahl von 64 mg KOH/g ebenfalls unter Rühren zugesetzt. Der Umsatz mit diesem Hydrophobierungsmittel war nach ca. 30 min beendet. Man erhält eine Isocyanatkomponente mit einem Isocyanatgehalt von 15,5 % NCO.

### Anwendung als Tunneldichtsystem:

Die Behälter einer Zweikomponenten-Polyurethan-Verarbeitungsmaschine wurden mit oben beschriebenen Komponenten befüllt und die Maschine so eingerichtet, dass die Polyol- und Isocyanatkomponente im Verhältnis 100 : 182 (Gewichtsverhältnis) vermischt und so dosiert wurden.

In einem mit Betonringen ausgekleideten Tunnel wurden diese Ringe so angebohrt, dass die umlaufende Dichtnut zugänglich war. Durch diese Bohrung mit dem angeflanschten Mischkopf der Polyurethan-Verarbeitungsmaschine wurde das flüssige Reaktionsgemisch unter Druck in die umlaufende Dichtnut eingetragen und härtete nachfolgend zu einem zähharten Produkt, welches die jeweils miteinander verbundenen Betonringe zuverlässig gegen Feuchtigkeit und andere Einflüsse abdichtete.

Das ausgehärtete Material wies folgende Eigenschaften auf:

| | |
|---|---|
| Härte | 70°Shore D |
| Zugfestigkeit | 20 N/mm² |
| Bruchdehnung | 80 % |
| E-Modul | 588 N/mm² |

### Ausführungsbeispiel 2

### ("weiche"-Ausführungsform, bevorzugt für den Einsatz als Straßenbeschichtungssystem)

### Herstellung der Polyolkomponente:

In einen entsprechenden Mischbehälter mit Rührvorrichtung wurden nacheinander 66 kg eines dimerisierten C₁₉-Fettalkohols (Handelsname: Sovermol^{®} 908, Firma Henkel) mit einer OH-Zahl von 206 mg KOH/g, 6 kg Diethyltoluylendiamin, 4 kg eines polymeren Amins mit einem Molekulargewicht von 2000g/mol und einer Amin-Zahl von 56 mg KOH/g (Handelsname: Jeffamine^{®} D2000 (BASF AG)), 21 kg eines Copolymerisats eines ungesättigten aromatischen C₉-/C₁₀-Kohlenwasserstofies mit Phenol mit einer OH-Zahl von 64 mg KOH/g sowie 3 kg eines zeolithischen Trockenmittels zu einer Polyolkomponente homogenisiert.

### Herstellung der Isocyanatkomponente:

In einem entsprechenden Reaktor mit Rührwerk, Heiz- sowie Kühlvorrichtung wurden 108 kg Diphenylmethandiisocyanat (Gemisch aus 4,4'- und 2,4'-Isomeren) vorgelegt und diesem unter Rühren 54 kg eines dimerisierten C₁₉-Fettalkohols (Handelsname: Sovermol^{®} 908 (Firma Henkel)) mit einer OH-Zahl von 206 mg KOH/g zugegeben. Das Reaktionsgemisch wurde unter Beachtung der Reaktionswärme mit der Heiz- oder Kühlvorrichtung auf ca. 80°C erwärmt. Diese Temperatur wurde mit Hilfe der Regelvorrichtung ca. 60 min gehalten. Nach vollständigen Umsatz wurde dem Prepolymer in einer zweiten Umsatzstufe 38 kg eines Copolymerisats eines ungesättigten aromatischen C₉-/C₁₀-Kohlenwasserstoffes mit Phenol mit einer OH-Zahl von 64 mg KOH/g ebenfalls unter Rühren zugesetzt. Der Umsatz mit diesem Hydrophobierungsmittel war nach ca. 30 min beendet. Man erhielt eine Isocyanatkomponente mit einem Isocyanatgehalt von 12,5 % NCO.

### Anwendung als Straßenbeschichtungssystem:

Die Behälter einer Zweikomponenten-Polyurethan-Verarbeitungsmaschine ausgestattet mit einer Sprühvorrichtung wurden mit oben beschriebenen Komponenten befüllt und die Maschine so eingerichtet, dass die Polyol- und Isocyanatkomponente im Verhältnis 100 : 124 (Gewichtsverhältnis) vermischt wurden.

Mittels Sprühvorrichtung wurde das Reaktionsgemisch auf den zu sanierenden Bereich der Straße insbesondere auf den Übergangsbereich vom Straßen- zum Brückenbelag aufgetragen. Durch die kurze Reaktionszeit von ca. 7 sec härtete das Reaktionsgemisch schnell aus. Durch Einstreuen von Kunststoffgranulat zwischen den schichtweise aufgesprühten Belag erhielt man eine nach kurzer Zeit wieder befahrbare Straßenbeschichtung.

Das ausgehärtete Material, die Polyurethanpolyharnstoffbeschichtung wies folgende Eigenschaften auf:

| | |
|---|---|
| Härte | 38°Shore A |
| Zugfestigkeit | 2 N/mm² |
| Bruchdehnung | 40 % |

## Patentansprüche

1. Tunneldichtsystem oder Straßenbeschichtungssystem, enthaltend ein Gießharzsystem, aufgebaut aus
a) Isocyanatprepolymeren mit einem NCO-Gehalt von 5 bis 28 %, erhältlich durch Umsetzung von Polyisocyanaten mit Dimerdiolen, mit
b) gegenüber Isocyanaten reaktiven Verbindungen oder Gemischen, die Aminogruppen enthalten.

2. Tunneldichtsystem oder Straßenbeschichtungssystem, enthaltend ein nach Anspruch 1, **dadurch gekennzeichnet, dass** die Komponente (a) und/oder die Komponente (b) ein Hydrophobierungsmittel enthält.

3. Tunneldichtsystem oder Straßenbeschichtungssystem, enthaltend ein nach Anspruch 2, **dadurch gekennzeichnet, dass** als Hydrophobierungsmittel ein Copolymerisat ungesättigter, aromatischer C₉-/C₁₀-Kohlenwasserstoffe mit Phenol verwendet wird.

4. Tunneldichtsystem oder Straßenbeschichtungssystem, enthaltend ein nach einem der Ansprüche 1 bis 3, **dadurch gekennzeichnet, dass** es sich bei der Komponente (b) um Verbindungen oder Gemische handelt, die primäre oder sekundäre Aminogruppen als alleinige funktionelle Gruppe aufweisen.

5. Tunneldichtsystem oder Straßenbeschichtungssystem, enthaltend ein nach einem der Ansprüche 1 bis 4, **dadurch gekennzeichnet, dass** Komponente (b) ein Aminopolyol enthält.

6. Tunneldichtsystem oder Straßenbeschichtungssystem, enthaltend ein nach Anspruch 5, **dadurch gekennzeichnet, dass** im Aminopolyol das Verhältnis Aminogruppen zu Hydroxylgruppen 51 : 49 bis 90 : 10 beträgt.

7. Tunneldichtsystem oder Straßenbeschichtungssystem, enthaltend ein nach Anspruch 5 oder 6, **dadurch gekennzeichnet, dass** Komponente (b) zusätzlich ein Dimerdiol enthält.

8. Tunneldichtsystem nach einem der Ansprüche 1 bis 7, **dadurch gekennzeichnet, dass** der NCO-Gehalt des Prepolymers 20 bis 27 Gew.-% beträgt und das Hydrophobisierungsmittel in einer Menge von 5 bis 20 Gew.-%, bezogen auf das Gießharzsystem, eingesetzt wird.

9. Straßenbeschichtungssystem nach einem der Ansprüche 1 bis 7, **dadurch gekennzeichnet, dass** der NCO-Gehalt des Prepolymers 5 bis 20 Gew.-% beträgt und das Hydrophobisierungsmittel in einer Menge von 20 bis 60 Gew.-%, bezogen auf das Gießharzsystem, eingesetzt wird.

10. Verfahren zur Herstellung eines Tunneldichtsystems oder Straßenbeschichtungssystems, durch Umsetzung von
a) Isocyanatprepolymeren mit einem NCO-Gehalt von 5 bis 28 %, erhältlich durch Umsetzung von Polyisocyanaten mit Dimerdiolen, mit
b) gegenüber Isocyanaten reaktiven Verbindungen oder Gemischen, die Aminogruppen enthalten.

11. Verfahren nach Anspruch 10, **dadurch gekennzeichnet, dass** Komponenten (a) ein Hydrophobierungsmittel enthält, wobei das Hydrophobierungsmittel erst nach erfolgter Umsetzung von Polyisocyanaten mit Dimerdiolen zugegeben wird.

## Claims

1. A tunnel sealing system or road coasting system, comprising a casting resin system, composed of
a) isocyanate prepolymers with an NCO content of from 5 to 28%, obtainable via reaction of polyisocyanates with dimer diols, with
b) mixtures or compounds reactive toward isocyanates and containing amino groups.

2. The tunnel sealing system or road coating system, comprising a according to claim 1, therein component (a) and/or component (b) comprise(s) a hydrophobicizing agent.

3. The tunnel sealing system or road coasting system, comprising a according to claim 2, wherein the hydrophobicizing agent used comprises a copolymer of unsaturated, aromatic C₉/C₁₀ hydrocarbons with Phenol.

4. The tunnel sealing system or road coating system, comprising a according to any of claims 1 to 3, wherein component (b) comprises compounds or mixtures which have primacy or secondary amino groups as sole functional group.

5. The tunnel sealing system or road coating system, comprising a according to any of clams 1 to 4, wherein component (b) comprises an aminopolyol.

6. The tunnel sealing system of road coaling system, comprising a according to claim 5, wherein the ratio of amino groups to hydroxy groups in the aminopolyol is from 51:49 to 90:10.

7. The tunnel sealing system or road coating system, comprising a according to claim 5 or 6, wherein component (b) also comprises a dimer dill.

8. A tunnel sealing system according to any of claims 1 to 7, wherein the NCO contest of the prepolymer is from 20 to 27% by weight and the amount used of the hydrophobicizing agent is from 5 to 20% by weight, based on the casting resin system.

9. A road coasting system according to any of claims 1 to 7, wherein the NCO content of the prepolymer is from 5 to 20% by weight and the amount used of the hydrophobicizing agent is from 20 to 60% by weight, based on the casting resin system.

10. A process for preparing a tunnel sealing system or road coating system, via reaction of
a) isocyanate prepolymers with an NCO content of from 5 to 28%, obtainable via redaction of polyisocyanates with dimer diols, with
b) compounds or mixtures reactive toward isocyanates and containing amino groups.

11. The process according to claim 10, wherein component (a) comprises a hydrophobicizing agent, the hydrophobicizing agent being added only after the reaction of polyisocyanates with dimer diols has been completed.

## Revendications

1. Système d'étanchéification de tunnels ou système de revêtement de routes, contentant un système de résine à couler, constitue par :
a) des prépolymères d'isocyanate ayant une teneur en NCO de 5 à 28 %, pouvant être obtens par réfaction de polyisocyanates avec des diols dimères, avec
b) des composés ou des mélangeas réactifs avec lets isocyanates, qui contienent des groupes amino.

2. Système d'étanchéification de tunnels ou système de revêtement de routes, contentant un selon la revendication 1, **caractérisé en ce que** le compostant (a) et/ou le compostant (b) continent un agent d'hydrophobation.

3. Système d'étanchéification de tunnels ou système de revêtement de routes, contenant un selon la revendication 2, **caractérisé en ce qu'**un copolymère d'hydrocarbures en C₉/C₁₀ aromatique insaturés avec du phénol est utilisé en tant qu'agent d'hydrophobation.

4. Système d'étanchéification de tunnel ou système de revêtement de routes, contenant un selon l'une quelconque des revendications 1 à 3, **caractérisé en ce que** le composant (b) correspond à des composés ou des mélanges qui comportent des groupes amino primaires ou secondaires en tant que groupe fonctionnel unique.

5. Système d'étanchéification de tunnels ou système de revêtement de routes, contenant un selon l'une quelconque des revendications 1 à 4, **caractérisé en ce que** le composait (b) contient un aminopolyol.

6. Système d'étanchéification de tunnels ou système de revêtement de routes, contentant un selon la revendication 5, **caractérisé en ce que** le rapport entre les groupes amino et les groupes hydroxyle dans l'aminopolyol est de 51:49 à 90:10.

7. Système d'étanchéification de tunnels ou système de revêtement de routes, contenant un selon la revendication 5 ou 6, **caractérisé en ce que** le compostant (b) contaient également un diol dimère.

8. Système d'étanchéification de tunnels selon l'une quelconque des revendications 1 à 7, **caractérisé en ce que** la teneur en NCO du prépolymère est de 20 à 27 % en poids et l'agent d'hydrophobation est utilisé en une quantité de 5 à 20 % en poids, par rapport au système de résine à couler.

9. Système de revêtement de routes selon l'une quelconque des revendications 1 à 7, **caractérisé en ce que** la teneur en NCO du prépolymère est de 5 à 20 % en poids et l'agent d'hydrophobation est utilisé en une quantité de 20 à 60 % en poids, par rapport au système de résine à couler.

10. Procédé de fabrication d'un système d'étanchéification de tunnels ou d'un système de revêtement de routes, par rédaction de
a) des prépolymères d'isocyanate ayant une teneur en NCO de 5 à 28 %, pouvant être obtenus par réaction de polyisocyanates avec des diols dimères, avec
b) des composés ou des mélanges réactifs avec les isocyanates, qui contiennent des groupes amino.

11. Procédé selon la revendication 10, **caractérisé en ce que** le composant (a) contient un agent d'hydrophobation, l'agent d'hydrophobation n'étant introduit qu'après la réalisation de la réaction des polyisocyanates avec les diols dimères.
